# EUROPÄISCHE PATENTSCHRIFT

(11) **EP 2 887 117 B1**
(45) Veröffentlichungstag und Bekanntmachung des Hinweises auf die Patenterteilung: **06.11.2024**
(21) Anmeldenummer: 14198503.6
(22) Anmeldetag: 17.12.2014
(51) Int. Cl.: G02B 21/00, G02B 21/36

(54) **Mikroskop und Verfahren zur SPIM Mikroskopie**
Microscope and method of SPIM microscopy
Microscope et procédé de microscopie SPIM

(30) Priorität: 18.12.2013 DE 102013021542
(43) Veröffentlichungstag der Anmeldung: 24.06.2015
(73) Patentinhaber: Carl Zeiss Microscopy GmbH, 07745 Jena (DE)
(72) Erfinder: Schweinitzer, Stefan, 07745 Jena (DE); Sprengholz, Philipp, 07743 Jena (DE)
(74) Vertreter: Loritz, Rainer

(56) Entgegenhaltungen:
- WO-A2-2012/122027
- US-A1- 2010 177 190
- US-A1- 2011 115 895
- US-A1- 2013 094 755
- J. HUISKEN ET AL: "Optical Sectioning Deep Inside Live Embryos by Selective Plane Illumination Microscopy", SCIENCE, vol. 305, no. 5686, 13 August 2004 (2004-08-13), US, pages 1007 - 1009, XP055473444, ISSN: 0036-8075, DOI: 10.1126/science.1100035
- ENGELBRECHT C J ET AL: "RESOLUTION ENHANCEMENT IN A LIGHT-SHEET-BASED MICROSCOPY (SPIM)", OPTICS LETTERS, OPTICAL SOCIETY OF AMERICA, vol. 31, no. 10, 15 May 2006 (2006-05-15), pages 1477 - 1479, XP001242795, ISSN: 0146-9592, DOI: 10.1364/OL.31.001477
- HUISKEN J ET AL: "Optical Sectioning Deep Inside Live Embryos by Selective Plane Illumination Microscopy", SCIENCE, AMERICAN ASSOCIATION FOR THE ADVANCEMENT OF SCIENCE, US, vol. 305, no. 5686, 13 August 2004 (2004-08-13), pages 1007 - 1009, XP002659026, ISSN: 0036-8075, DOI: 10.1126/SCIENCE.1100035

## Beschreibung

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs bzw. in einer definierten Ebene in der Nähe dieser Fokusebene umfasst. Die Mittel zur Beleuchtung umfassen eine, vorzugsweise kohärentes Licht abstrahlende, Beleuchtungsquelle.

Ein Mikroskop, bei dem Beleuchtungsstrahlengang und Detektionsstrahlengang im Wesentlichen senkrecht zueinander angeordnet sind und bei dem die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der Selective-Plane-Illumination-Microscopy (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im Wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit ebenfalls die Form eines SPIM-Lichtblatts.

Die SPIM-Technologie ist beispielsweise beschrieben in Engelbrecht et al., Optics Letters 31, 1477 (2006), in Huisken et al., Science 305, 1007 (2004), in der DE 102 57 423 A1 und in der WO2004/0530558 A1.

Die beschriebene "Lichtblattmikroskopie" (Light sheet microscopy) kombiniert optische Schnitte mit einer Weitfeld-Detektion über eine ortsauflösende Kamera (CCD Kamera), indem die komplette laterale fokale Ebene (xy-Ebene) des Detektionsobjektives mit einem dünnen Lichtblatt beleuchtet wird. Die Lichtblattbeleuchtung erfolgt rechtwinklig zur Detektionsachse (z-Achse).

Die Probe wird in dem überlappenden Bereich von Beleuchtung und Detektion platziert. Fluoreszenzsignale, die durch das Beleuchtungslichtblatt angeregt werden, werden über das gesamte Gesichtsfeld des Detektionsobjektivs auf die Kamera abgebildet. Durch die rechtwinklige Beleuchtung mit einem dünnen Lichtblatt wird nur ein kleiner Teil der axialen Ausdehnung der Detektionsoptik beleuchtet und somit ein optischer Schnitt erzeugt. Um einen anderen Bereich in der Probe zu beobachten wird die Probe, unabhängig von der Optik, mit einer Probenpositioniereinheit durch das Lichtblatt gefahren. Durch das Aufnehmen optischer Schnitte an verschiedenen Probenpositionen entlang der Detektionsachse ist die Aufnahme von dreidimensionalen Bildstapeln möglich. Diese Bildstapel können anschließend zu einem 3D-Bild rekonstruiert werden.

Ein Bildstapel umfasst beispielsweise 200 Bilder.

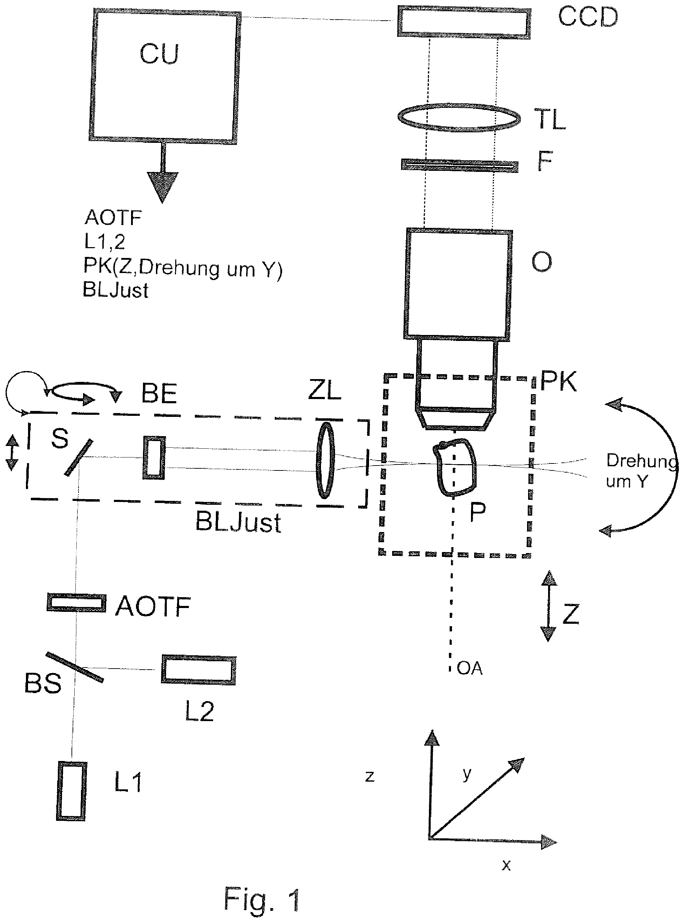

In Fig. 1 ist der Grundaufbau eines SPIM Mikroskops zur Durchführung des erfinderischen Verfahrens dargestellt. Eine Probe P, die sich in einer Probenkammer PK befinden kann, wobei Probe oder Probenkammer in X, Y und Z verstellbar und um die senkrecht zur Zeichenebene liegende Y-Achse rotierbar angeordnet sind, wird von einem Detektionsstrahlengang erfasst. Dieser besteht aus einem Detektionsobjektiv O, dessen Detektionsachse bzw. optische Achse in Z Richtung verläuft und an das sich in Detektionsrichtung ein vorzugsweise auswechselbarer Lichtfilter F, eine Tubuslinse TL und ein Flächenempfänger CCD anschließen.

Im Wesentlichen senkrecht zur Detektionsachse Z steht, hier in X- Richtung, ein Beleuchtungsstrahlengang, hier bestehend aus zwei über einen Strahlteiler BS verkoppelte Laser L1, L2, die über einen AOTF zur Wellenlängenauswahl und Intensitätseinstellung, einen Umlenkspiegel S und eine Strahlaufweitung BE sowie eine anamorphotische Optik wie hier eine Zylinderlinse ZL zur Strahlformung, die flächige Lichtverteilung erzeugen, die Probe durchdringen.

Schematisch dargestellt ist eine Justierungseinheit BLjust, die beispielsweise die Elemente S, BE und ZL in mehreren Richtungen justieren oder verkippen kann.

Eine gemeinsame Kontroll- und Steuerungseinheit CU, in der Regel gebildet durch einen Rechner und eine Anzeigeeinheit (Display), ist mit allen Verstelleinrichtungen wie dem AOTF, der Probenverstellung oder Probenkammerverstellung (ermöglicht Verstellung von Probe oder Probenkammer in X, Y und Z sowie Drehung um Y) und der Beleuchtungsjustierung BLjust verbunden um das erfindungsgemäße Verfahren ausführen zu können.

Aus US 2013/0094755 A1 ist ein Verfahren zur dreidimensionalen Abbildung einer Probe bekannt, bei dem Bildinformationen aus unterschiedlichen Ebenen in der Tiefe der Probe ortsaufgelöst gespeichert werden und anschließend aus diesen Bildinformationen das dreidimensionale Bild der Probe rekonstruiert wird. Zu diesem Zweck werden ein Referenzobjekt neben oder in der Probe positioniert, die Detektionsrichtung, aus der die Bildinformationen erfasst werden, relativ zur Probe und zum Referenzobjekt mehrfach geändert, aus jeder der mit einer Änderung vorgegebenen Detektionsrichtungen Bildinformationen von dem Referenzobjekt erfasst und Bildinformationen aus unterschiedlichen Ebenen in der Tiefe der Probe erfasst und anhand der Raumkoordinaten X, Y, Z der vom Referenzobjekt gespeicherten Bildinformationen Transformationsoperatoren zur Translation, Rotation und Deformation gewonnen, mit denen Bildinformationen gleichen Ursprungs aus den verschiedenen Detektionsrichtung zur Überlappung gebracht werden, und anschließend diese Transformationsoperatoren der Rekonstruktion des dreidimensionalen Bildes der Probe aus den Raumkoordinaten X, Y, Z der von der Probe gewonnenen Bildinformationen zugrundegelegt.

Aus US 2010 0177190 A1 ist ein System zur Mikroskopie bekannt, mit dem Bildstapel durch das Bewegen einer Fokusebene eines Bildfokussiermoduls aufgenommen werden können. Mit dem System können mehrere Bildstapel aus unterschiedlichen Beobachtungswinkeln aufgenommen werden, die miteinander fusioniert werden können, um eine bessere Auflösung in einer Dimension der Probe zu erzielen. Um Bildstapel aus unterschiedlichen Beobachtungswinkeln aufzunehmen, kann ein Probentisch, auf dem die Probe gehaltert ist, in einem beliebigen Winkel verdreht werden.

Aus WO 2012 122027 A2 ist ein Modul zur Konvertierung eines Mikroskops zu einem SPIM-Mikroskop sowie ein konvertiertes SPIM-Mikroskop bekannt. Das konvertierte SPIM-Mikroskop weist ein Anregungs- und ein Detektionsobjektiv auf, wobei sowohl mit dem Anregungs- als auch mit dem Detektionsobjektiv alternierend Lichtblätter erzeugt werden können, die im Wesentlichen senkrecht zueinander ausgerichtet sind und durch das jeweils andere Objektiv detektiert werden können. Mit dem konvertierten SPIM-Mikroskop erzeugte erste und zweite Bilder können durch einen Prozessor miteinander kombiniert werden, um Kompositbilder mit einer verbesserten Auflösung zu erzeugen.

Aus "Optical Sectioning Deep Inside Live Embryos by Selective Plane Illumination Microscopy" (Huisken J. et al, Science, Bd. 305, Nr. 5686, 2004) ist ein Verfahren zur SPIM-Mikroskopie bekannt, bei dem eine rotierbar gehalterte Probe aus unterschiedlichen Winkeln mit einem Lichtblatt angeregt werden kann. Mit unterschiedlichen Beleuchtungswinkeln aufgenommene Bilder werden zugeschnitten, skaliert, gedreht, um Hintergrund-Artefakte zu reduzieren gefiltert und miteinander in Korrelation gebracht. Anschließend wird eine Translation auf die Bilder angewendet, die durch einen automatisch erzeugten Korrelationspeak bestimmt wird. Die Bilder werden in der Folge miteinander fusioniert, um hochaufgelöste Merkmale aus einzelnen Bildern zu extrahieren und in einem Datensatz zu vereinen.

Aus US 2011/0115895 A1 ist ein SPIM-Mikroskop bekannt, das einen Strahlengangumschalter zum Erzeugen alternierender Lichtstrahlen und zwei Beleuchtungseinheiten umfasst, die aus den alternierenden Lichtstrahlen zwei gegenläufige, koplanare, alternierende Lichtblätter erzeugen, um die Fokalebene der Detektionseinheit aus entgegengesetzten Richtungen zu beleuchten.

### Problemstellung und erfinderische Lösung

Die Probe wird in dem überlappenden Bereich von Beleuchtung und Detektion platziert. Fluoreszenzsignale werden über das gesamte Gesichtsfeld des Detektionsobjektivs auf eine Kamera abgebildet. Durch die rechtwinklige Beleuchtung mit einem dünnen Lichtblatt wird nur ein kleiner axialer Teil des Detektionsvolumens beleuchtet und somit ein optischer Schnitt erzeugt. Um einen anderen Bereich in der Probe zu beobachten, wird die Probe unabhängig von der Optik mit einer Probenpositioniereinheit durch das Lichtblatt gefahren. Durch das Aufnehmen optischer Schnitte an verschiedenen Probenpositionen entlang der Detektionsachse ist die Erzeugung von dreidimensionalen Bildstapeln möglich. Solche Bildstapel können aus verschiedenen Winkeln aufgenommenen werden. Ein unter einem bestimmten Winkel aufgenommener Bildstapel wird auch als View bezeichnet. Mehrere unter einem bestimmten Winkel aufgenommene Bildstapel können zu einem 3D-Bild zusammengeführt werden, welches die Bildinformationen aus allen Bildstapeln beinhaltet. Dieser Vorgang wird als Registrierung bezeichnet.

Für die Registrierung kommen aktuell Verfahren zum Einsatz, welche mit Hilfe von Referenzen (z.B. fluoreszierenden "Beads" als künstliche Orientierungspunkte) oder Grauwertintensitäten die einzelnen Aufnahmewinkel automatische zu einem Bild zusammenführen. Hierbei gibt es einen View, der als Referenzbild bezeichnet wird und weitere Views aus unterschiedlichen Winkeln, die nach Korrespondenzen zum Referenzbild durchsucht werden. Wenn genügend Korrespondenzen gefunden wurden, können Transformationsmatrizen berechnet werden. Mit deren Hilfe wird anschließend jeder View auf das Referenzbild transformiert. Abschließend werden alle Views in einem Ergebnisbild fusioniert.

Das automatische Finden der Korrespondenzen ist ein rechenzeitintensives Verfahren, welches nicht immer den gewünschten Erfolg bringt, da abhängig von der Probe fehlerhafte oder keine Korrespondenzen gefunden werden können. Auch die Verwendung von festen Referenzen (wie z.B. Beads), welche im Allgemeinen eine bessere Registrierung erlauben, kann nicht immer gewährleistet werden, da diese eine wesentlich zeitintensivere Probenvorbereitung erfordert. Zudem sind Beads vom Nutzer häufig nicht erwünscht, da sie zu Bildstörungen führen oder einen biologischen Einfluss auf die Probe haben können.

Eine manuelle Registrierung bzw. ein Steuern des Findens der Korrespondenzen ist eine Lösung dieser Probleme. Auf Grund der dreidimensionalen Gestalt der Bilder und der sich daraus ergebenden vielen Freiheitsgrade (Translation, Rotation, Skalierung, Scherung, etc.) ist eine einfache und schnelle Vorgehensweise notwendig.

Die Lösung für dieses Problem ist ein zumindest teilweises manuelles Registrierverfahren, welches die Nachteile der Dreidimensionalität der einzelnen Aufnahmewinkel beseitigt. Zuvor werden die Koordinatensysteme aller Bildstapel (Views) um ihren Aufnahmewinkel um die Y-Achse gedreht. Die Bildstapel stellen sich nunmehr so dar, als ob sie aus dem gleichen Aufnahmewinkel aufgenommen wurden.

Durch eine Überlagerung der Bildstapel kann nun ein manuelles Ausrichten bzw. Positionieren erfolgen. Diese Positionierung geschieht in mindestens 2 Schritten und wird durch Maximumintensitätsprojektionen der Bildstapel realisiert.

Im ersten Schritt werden die maximalen Intensitäten der Bildstapel entlang der Z-Achse projiziert. Anschließend werden die resultierenden 2D-Bilder der verschiedenen Bildstapel durch geeignete Transformationen (z.B. rigide, affin oder elastisch) auf das 2D-Bild des Referenzwinkels positioniert. Danach wird diese Transformation auf die zugehörigen Bildstapel (somit in 3D) angewendet.

Im zweiten Schritt werden die maximalen Intensitäten der Bildstapel entlang der Y-Achse projiziert und erneut die resultierenden 2D-Bilder der verschiedenen Bildstapel (Views) durch geeignete Transformationen auf das 2D-Bild des Referenzwinkels positioniert. Abermals wird die gewonnene Transformation auf die zugehörigen Bildstapel angewendet.

Das Ergebnis ist nun ein fusionierter Bildstapel, welcher aus verschiedenen Aufnahmewinkeln manuell registriert wurde. Durch das Positionieren in 2D ist dies auch manuell mit hoher Effizienz möglich und bedarf keiner komplexen automatischen

Registrierverfahren. Weiterhin ist es nicht notwendig, Beads in die Probe einzubringen, da die Positionierung mithilfe von Probenstrukturen selbst stattfinden kann.

Das manuelle Registrierverfahren ist nicht auf die zuvor beschriebene Lösung beschränkt. Insbesondere sind folgende Modifikationen möglich:
- Zur Ausrichtung können neben den zuvor beschriebenen Projektionen entlang der Z-sowie Y-Achse auch Projektionen entlang der X-Achse verwendet werden.
- Zur Ausrichtung ist lediglich eine beliebige Reihenfolge von mindestens 2 vorzugsweise orthogonal zueinander stehenden Projektionen erforderlich. Das bedeutet, dass z.B. in beliebigem Wechsel zwischen Draufsicht, Frontalansicht und Seitenansicht ausgerichtet werden kann.
- Zur Ausrichtung der einzelnen Projektionen können verschiedene Transformationsarten verwendet werden. Hierzu gehören beispielsweise rigide, affine, elastische oder lokal elastische Transformationen. Eine Einschränkung der Freiheitsgrade ist möglich.
- Der beschriebene Workflow kann teilautomatisiert werden. Beispielsweise ist es möglich, die Projektionen automatisiert auszurichten.
- Statt der Maximumintensitätsprojektion sind andere Varianten der Projektion möglich. Beispielsweise die Subvolumen-Maximumintensitätsprojektion oder die Minimumintensitätsprojektion.
- Aufnahmen, deren Views sich aus mehreren Kanälen (spektral unterschiedlich) zusammensetzen, können ebenfalls manuell registriert werden. Hierzu sind für die Ausrichtung der verschiedenen Views die gleichen Kanäle zu verwenden.
- Die manuelle Multi-View-Registrierung kann ohne Einschränkung auf Aufnahmen einer Zeitserie angewendet werden. Dabei ist es beispielsweise denkbar, dass der erste Zeitpunkt manuell registriert wird und die daraus resultierenden Transformationsmatrizen anschließend automatisch auf alle nachfolgenden Zeitpunkte angewendet werden.

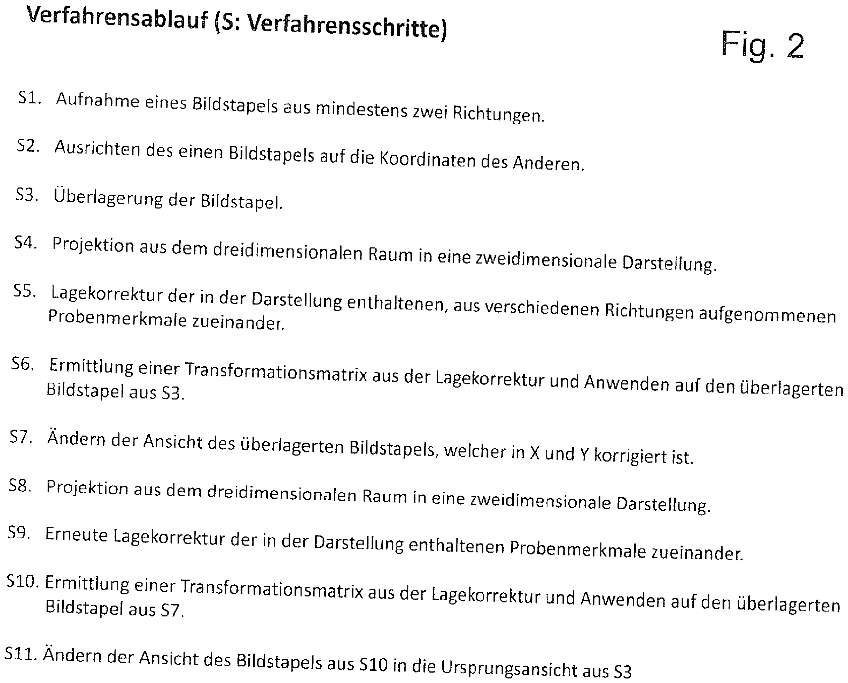

Die Erfindung wird nachstehend weiter anhand der schematischen Darstellungen erläutert. Fig. 2 zeigt den prinzipiellen Ablauf des erfindungsgemässen Verfahrens in Verfahrensschritten S1 - S11:

| | |
|---|---|
| S1. | Aufnahme eines Bildstapels aus mindestens zwei Richtungen. |
| S2. | Ausrichten des einen Bildstapels auf die Koordinaten des Anderen. |
| S3. | Überlagerung der Bildstapel. |
| S4. | Projektion aus dem dreidimensionalen Raum in eine zweidimensionale Darstellung. |
| S5. | Lagekorrektur der in der Darstellung enthaltenen, aus verschiedenen Richtungen aufgenommenen Probenmerkmale zueinander. |
| S6. | Ermittlung einer Transformationsmatrix aus der Lagekorrektur und Anwenden auf den überlagerten Bildstapel aus S3. |
| S7. | Ändern der Ansicht des überlagerten Bildstapels, welcher in X und Y korrigiert ist. In Fig. 3 ist Ansicht von Oben gewählt. |
| S8. | Projektion aus dem dreidimensionalen Raum in eine zweidimensionale Darstellung. |
| S9. | Erneute Lagekorrektur der in der Darstellung enthaltenen Probenmerkmale zueinander. |
| S10. | Ermittlung einer Transformationsmatrix aus der Lagekorrektur und Anwenden auf den überlagerten Bildstapel aus S7. |
| S11. | Ändern der Ansicht des Bildstapels aus S10 in die Ursprungsansicht aus S3 (im Beispiel Ansicht von Vorne). |

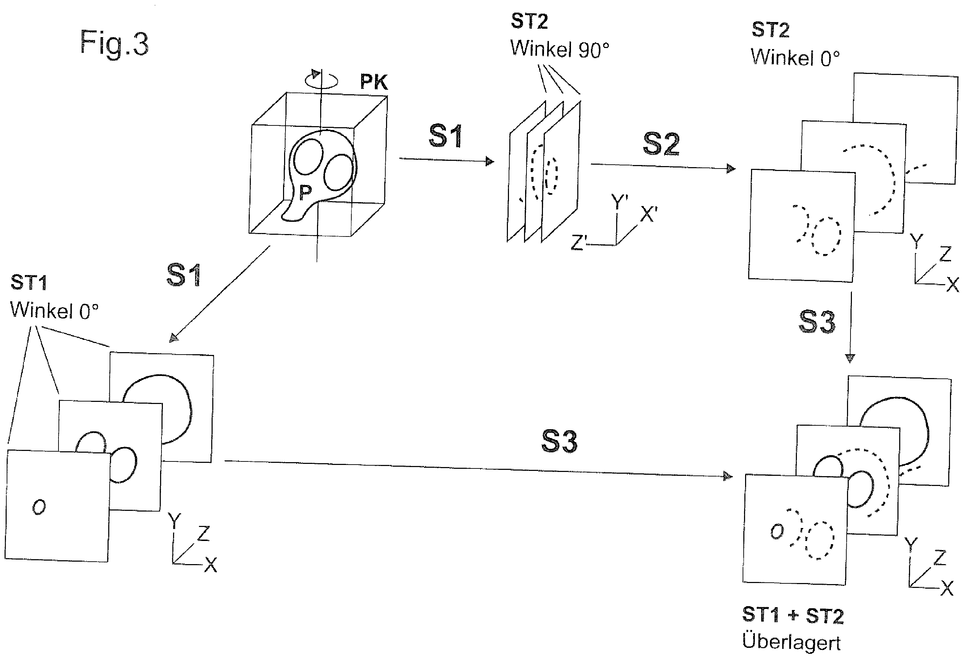

Anhand der genannten Verfahrensschritte wird in Fig. 3-5 der Ablauf näher erläutert.

In Fig. 3 ist die Probenkammer PK dargestellt (siehe Fig.1), die um eine senkrechte Achse drehbar ist.

Durch die Drehung der Probenkammer und Durchfahren des Lichtblatts durch die Probe durch eine Z-Verstellung der Probenkammer und/oder des Lichtblattes erfolgt über das Objektiv eine Aufnahme von Bildstapeln die unter unterschiedlichen Beleuchtungswinkeln des Lichtblatts entstanden sind. Beispielsweise kann wie dargestellt die Aufnahme unter den Beleuchtungsachsen z, z`, erfolgen, die senkrecht zueinander stehen.

Ohne Einschränkung sind auch andere unterschiedliche Aufnahmewinkel möglich, auch beispielsweise drei Aufnahmen unter beispielsweise 30 Grad Winkelversatz.

Beim Durchfahren des Lichtblatts in Z Richtung entstehen jeweils Stapel aufgenommener Bilder die im Bildspeicher hinterlegt sind (CU in Fig.1).

Hier schematisch dargestellt ist ein Stapel aus Einzelbildern ST1 und ST2, die unter dem Winkel 0 und 90 Grad aufgenommen wurden. Schematisch dargestellt sind in ST1 und ST2 jeweils unterschiedliche Objektdetails der Probe sichtbar.

Die drei Einzelbilder sind hier nur der Anschaulichkeit halber ausgewählt, es kann sich um beispielsweise 1000 Einzelbilder pro Stapel handeln.

Die Anzahl der Einzelbilder pro Stapel muss nicht identisch sein um das erfindungsgemässe Verfahren auszuführen.

Im Schritt S2 in Fig. 3 wird nun der Stapel ST2 in seiner Orientierung an die Orientierung des Stapels ST1 angepasst, d.h. sein Koordinatensystem wird um 90 Grad entlang der dargestellten y` Achse gedreht.

Im nächsten Schritt S3 erfolgt eine Überlagerung der gleich orientierten Bildstapel ST1 und ST2 in einem gemeinsamen Stapel ST1+ST2. Hierbei ist die genaue Reihenfolge der Einzelbilder nicht entscheidend, es kann beispielsweise auch ST2 hinter ST1 angeordnet sein.

Aus der oben erwähnten prinzipiell möglichen unterschiedlichen Anzahl der Einzelbider von ST1 und ST2 folgt, dass auch die Z- Abstände zwischen den Einzelbildern bei der Aufnahme unterschiedlich sein können.

Die Bildstapel können auch einen seitlichen Versatz aufweisen oder die Einzelbilder in ST1 und ST2 können unterschiedliche Masse in lateraler Richtung aufweisen.

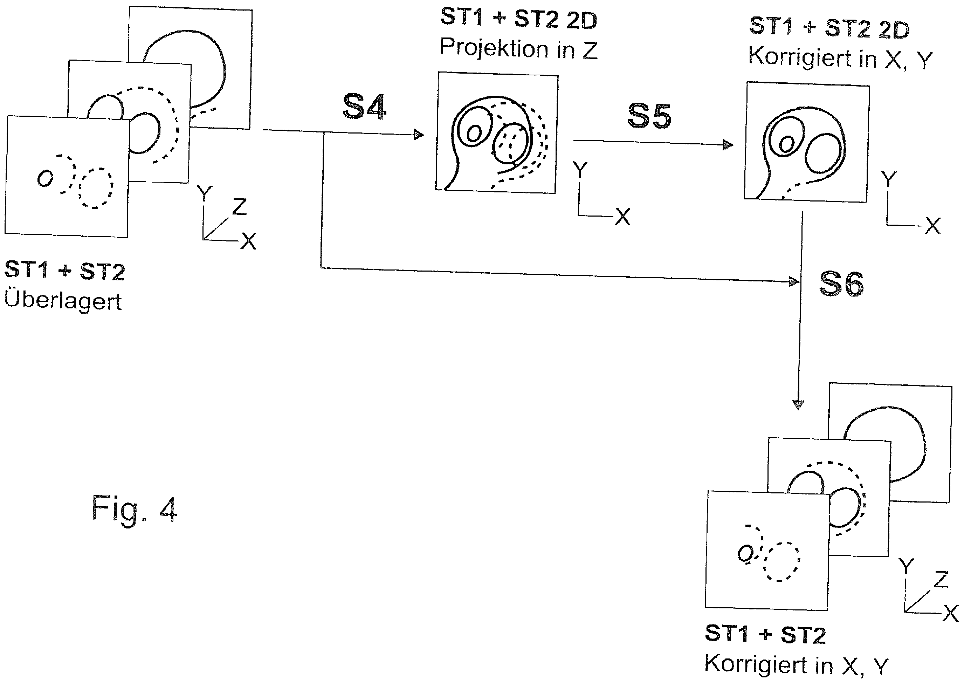

In Fig. 4 erfolgt im Schritt S4 eine Projektion aus der dreidimensionalen in eine zweidimensionale Darstellung.

Hierbei wird aus den überlagerten Bildern in Z- Richtung pixelweise, beispielsweise anhand der Bildpixel eines Bildes von ST1 der Bildpixel eines Einzelbildes in Z-Richtung (axial) ermittelt, der die größte Intensität aufweist. Statt einer maximalen Intensität kann auch ein bestimmter Intensitätsschwellwert gewählt werden oder eine Bestimmung der minimalen Intensität in Z-Richtung kann erfolgen.

Wird dies für alle Bildpixel durchgeführt entsteht nach dem Schritt S4 eine zweidimensionale Darstellung ST1 +ST2 2D, die wie schematisch dargestellt Bildinformationen sowohl von ST1 als auch (gestrichelt) von ST2 enthält. Dem Benutzer können diese Informationen unterscheidbar dargestellt werden.

Im Schritt S5 erfolgt durch den Benutzer über Eingabemittel (CU in Fig.1) oder automatisch oder erst grob automatisch und dann fein durch den Benutzer eine Verschiebung und/oder Drehung der Einzelbilder ST1 und ST2 in der 2D Darstellung, hier in der X/Y-Ebene und dadurch eine Korrektur des Bildlage von ST1 und ST2 zueinander. In der 2D-Ebene sind hierzu die beiden Bildinformationen von ST1 und ST2 voneinander separiert und verschiebbar/verdrehbar, allgemein tansformierbar angeordnet.

Die durchgeführten Verschiebungen/Drehungen werden in CU erfasst und in eine mathematische Koordinatentransformation für die X/Y-Koordinaten in der zweidimensionalen Darstellung umgewandelt.

Dies kann beispielsweise und ohne Einschränkung eine affine Transformation sein.

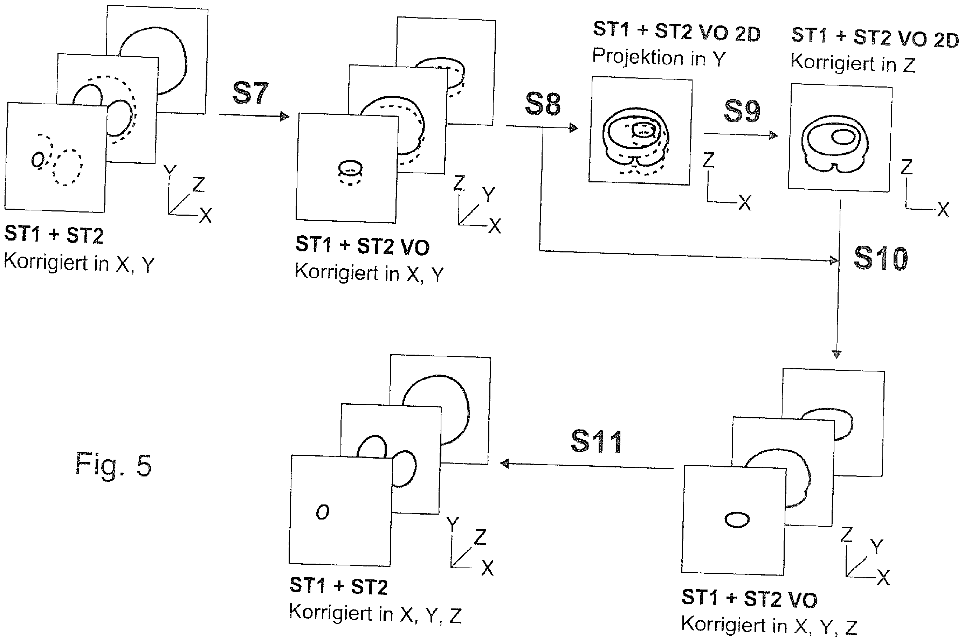

Diese wird auf den überlagerten Bildstapel ST1+ST2 wie er vor dem Schritt S4 vorlag, angewendet (Schritt S6), so dass ein bezüglich X/Y korrigierter dreidimensionaler Bildstapel vorliegt. In Fig. 5 wird, ausgehend von diesem Bildstapel im Schritt S7, eine Umorientierung in ST1+ST2 VO vorgenommen und eine Draufsicht in Richtung der Y Achse erzeugt. Diese enthält weiterhin Strukturmerkmale von ST1 und ST2 und analog zu Schritt S4 wird aus der dreidimensionalen Darstellung eine zweidimensionale Darstellung durch Intensitätsanalyse, hier jetzt aber in Y Richtung, im Schritt S8 erzeugt. In dieser folgenden zweidimensionalen Darstellung liegen in der X/Z Ebene wiederum unterscheidbare und einzeln verschiebbare/verdrehbare Probenmerkmale aus ST1 und ST2. Im Schritt S9 erfolgt wiederum analog zu S5 die automatische und/oder manuelle Ausrichtung und Überdeckung zueinander unter Ermittlung einer Koordinatentransformation die analog zu S6 in S10 zu einer dreidimensionalen Darstellung führt, die nunmehr sowohl in X/Z Richtung als auch vorher schon in X/Y Richtung bezüglich der Probendetails ausgerichtet ist und für die weitere Darstellung bzw. Abspeicherung und spätere Untersuchung in CU zur Verfügung steht.

In einem Schritt S11 kann noch die Rückführung in die ursprüngliche Orientierung wie nach Schritt S3 mit der axialen Richtung in Z Richtung erfolgen um die originalen Aufnahmebedingungen besser widerzuspiegeln.

Wie weiter oben erwähnt kann es sich auch um mehr als zwei Bildstapel, beispielsweise drei jeweils unter 30 Grad aufgenommene, handeln.

Dies führt jedoch vorteilhaft nicht zu einer Erhöhung der oben beschriebenen Verfahrensschritte sondern es werden lediglich in den zwei unterschiedlichen Orientierungen wie in Fig. 3 dargestellt mehr als zwei Bildstapel überlagert und auf zwei Koordinaten reduziert.

Als Mittel für den Benutzer kann ein fachübliches graphisches User Interface (GUI) auf einem Bildschirm dienen mit beispielsweise mehreren Slidern ( Schiebern) für die X-, Y- und Z-Verschiebung sowie für eine Drehung.

## Patentansprüche

1. Verfahren zur SPIM-Mikroskopie mit einem Mikroskop, bestehend aus
- einer Beleuchtungseinrichtung, umfassend eine Beleuchtungslichtquelle (L1, L2) und einen Beleuchtungsstrahlengang zur Beleuchtung einer Probe (P) mit einem Lichtblatt,
- einer Detektierungseinrichtung (CCD) zur Detektierung von Licht, das von der Probe (P) abgestrahlt wird, mit einem Objektiv (O),
- wobei das Lichtblatt im Fokus des Objektives (O) oder einer definierten Ebene in der Nähe des Fokus des Abbildungsobjektivs (O) im Wesentlichen eben ist und das Objektiv (O) eine optische Achse (OA) aufweist, die die Ebene des Lichtblattes in einem von Null verschiedenen Winkel, bevorzugt senkrecht schneidet,
- wobei die Probe (P) zur Erfassung unterschiedlicher Probenebenen durch das Lichtblatt in Richtung der optischen Achse (OA) des Objektives (O) verschoben wird und eine Beleuchtung der Probe (P) unter mindestens einem ersten und einem zweiten Beleuchtungswinkel erfolgt und bei jedem Beleuchtungswinkel mehrere Probenebenen detektiert und als mindestens erste und zweite Bildstapel (ST1, ST2), die Probenstrukturen enthalten, abgespeichert werden,
**dadurch gekennzeichnet, dass**
A) eine manuelle Ausrichtung der Bildstapel (ST1, ST2) zueinander erfolgt, indem die Koordinatensysteme aller Bildstapel (ST1, ST2) in das Koordinatensystem des ersten Bildstapels (ST1) ausgerichtet werden,
B) die mindestens ersten und zweiten Bildstapel (ST1, ST2) zu einem überlagerten Bildstapel (ST1+ST2) überlagert werden,
C) eine Projektion des überlagerten Bildstapels (ST1+ST2) in eine zweidimensionale Darstellung erfolgt,
D) aus unterschiedlichen Beleuchtungswinkeln detektierte, in der zweidimensionalen Darstellung enthaltene, Probenstrukturen zueinander in ihrer Lage korrigiert werden,
E) aus den Koordinaten der Lagekorrektur der Probenstrukturen eine Koordinatentransformation ermittelt wird,
F) die Koordinatentransformation zur Ausrichtung auf den überlagerten Bildstapel (ST1+ST2) angewendet wird.

2. Verfahren nach Anspruch 1, wobei die Orientierung des überlagerten Bildstapels verändert wird und die Schritte B) - F) auf den neu orientierten überlagerten Bildstapel zur Erzeugung eines dreidimensional ausgerichteten Bildstapels angewendet werden.

3. Verfahren nach Anspruch 2, wobei der dreidimensional ausgerichtete Bildstapel in seiner Orientierung auf die ursprüngliche Beleuchtungsrichtung ausgerichtet wird.

4. Verfahren nach einem der vorangehenden Ansprüche, wobei die Koordinatentransformation eine rigide oder affine oder elastische oder lokal elastische Transformation ist.

5. Verfahren nach einem der vorangehenden Ansprüche, wobei bei Schritt C) innerhalb der überlagerten Bildstapel für die Einzelpixel der Bilder jeweils ein Intensitätsvergleich zwischen den Bildern erfolgt.

6. Verfahren nach Anspruch 5, wobei das Pixel mit dem Maximalwert oder Minimalwert oder einem vorgegebenen Schwellwert oder dem Mittelwert oder dem Median herangezogen wird.

7. Verfahren nach einem der vorangehenden Ansprüche, wobei die Lagekorrektur gemäß Schritt D) in einem Computer durch Bildanalyse und/oder über Eingabemittel für einen Benutzer erfolgt.

8. Verfahren nach einem der vorangehenden Ansprüche, wobei eine grobe Ausrichtung im Computer und eine Feinausrichtung über die Eingabemittel vorgesehen ist.

9. Verfahren nach einem der vorangehenden Ansprüche, wobei die mindestens ersten und zweiten Bildstapel zur Erfassung unterschiedlicher Fluoreszenzmarker in mindestens zwei Spektralbereichen detektiert werden.

10. Verfahren nach Anspruch 9, wobei jeweils ein erster und ein zweiter Bildstapel mit einem gleichen oder ähnlichen Spektralbereich zur Durchführung der Schritte A) - F) herangezogen werden.

11. Verfahren nach einem der vorangehenden Ansprüche, wobei bei Zeitserienaufnahmen zu einem ersten Zeitpunkt die Schritte A) - F) sowie vorzugsweise auch nach Anspruch 2 durchgeführt werden und die ermittelten Koordinatentransformationen auf bei weiteren Zeitpunkten aufgenommene Bildstapel angewendet werden.

12. Verfahren nach einem der vorangehenden Ansprüche, wobei bei Zeitserienaufnahmen die Schritte A) - F) zu mehreren Zeitpunkten der Zeitserie wiederholt werden.

13. Verfahren nach einem der vorangehenden Ansprüche, wobei vor der Ausrichtung die Koordinatensysteme aller Bildstapel um ihren Aufnahmewinkel um eine Y-Achse gedreht werden, so dass sie sich darstellen, als ob sie aus dem gleichen Aufnahmewinkel aufgenommen wurden.

14. Datenträger mit einem Computerprogramm, das zur Durchführung des Verfahrens nach einem der vorhergehenden Ansprüche eingerichtet ist.

15. SPIM-Mikroskop mit
- einer Beleuchtungseinrichtung, umfassend eine Beleuchtungslichtquelle (L1, L2) und einen Beleuchtungsstrahlengang zur Beleuchtung einer Probe (P) mit einem Lichtblatt,
- einer Detektierungseinrichtung (CCD) zur Detektierung von Licht, das von der Probe (P) abgestrahlt wird, mit einem Objektiv (O),
- wobei das Lichtblatt im Fokus des Objektives (O) oder einer definierten Ebene in der Nähe des Fokus des Abbildungsobjektivs (O) im Wesentlichen eben ist und das Objektiv (O) eine optische Achse (OA) aufweist, die die Ebene des Lichtblattes in einem von Null verschiedenen Winkel, bevorzugt senkrecht schneidet,
**gekennzeichnet durch** eine Kontroll- und Steuerungseinheit, eingerichtet zur Durchführung des Verfahrens nach einem der Ansprüche 1 bis 13.

16. Mikroskop nach Anspruch 15, das ein graphisches User Interface zur Durchführung mindestens des Schrittes D) durch einen Benutzer aufweist.

## Claims

1. Method of SPIM microscopy using a microscope, consisting of
- an illumination device comprising an illumination light source (L1, L2) and an illumination beam path for illuminating a sample (P) with a light sheet,
- a detection device (CCD) for detecting light radiated from the sample (P) using an objective (0),
- the light sheet being substantially planar in the focus of the objective (O) or in a defined plane in the vicinity of the focus of the imaging objective (O) and the objective (O) having an optical axis (OA) intersecting the plane of the light sheet at an angle that is different from zero, preferably perpendicularly,
- the sample (P) being displaced through the light sheet in the direction of the optical axis (OA) of the objective (O) for the purpose of detecting different sample planes and an illumination of the sample (P) being implemented at at least a first and a second illumination angle and a plurality of sample planes being detected at each illumination angle and being stored as at least first and second image stacks (ST1, ST2) containing sample structures,
**characterized in that**
A. there is a manual alignment of the image stacks (ST1, ST2) in relation to one another by virtue of the coordinate systems of all image stacks (ST1, ST2) being aligned into the coordinate system of the first image stack (ST1),
B. the at least first and second image stacks (ST1, ST2) are overlaid to form an overlaid image stack (ST1+ST2),
C. there is a projection of the overlaid image stack (ST1+ST2) into a two-dimensional representation,
D. sample structures detected from different illumination angles and contained in the two-dimensional representation are corrected in terms of their pose in relation to one another,
E. a coordinate transformation is ascertained from the coordinates of the pose correction of the sample structures,
F. the coordinate transformation is applied to the overlaid image stack (ST1+ST2) for alignment purposes.

2. Method according to Claim 1, wherein the orientation of the overlaid image stack is modified, and steps B-F are applied to the newly oriented overlaid image stack for the purpose of generating a three-dimensionally aligned image stack.

3. Method according to Claim 2, wherein the three-dimensionally aligned image stack is aligned in terms of its orientation with the original illumination direction.

4. Method according to any of the preceding claims, wherein
the coordinate transformation is a rigid or affine or elastic or locally elastic transformation.

5. Method according to any of the preceding claims, wherein
there is a respective intensity comparison between the images during step C for the individual pixels of the images within the overlaid image stacks.

6. Method according to Claim 5, wherein
the pixel with the maximum value or minimum value or a given threshold value or the mean value or the median is used.

7. Method according to any of the preceding claims, wherein
the pose correction in accordance with step D is implemented on a computer by image analysis and/or by way of input means for a user.

8. Method according to any of the preceding claims, wherein
a coarse alignment on the computer and a fine alignment by way of the input means are provided.

9. Method according to any of the preceding claims, wherein
the at least first and second image stacks are detected for the purpose of registering different fluorescent markers in at least two spectral ranges.

10. Method according to Claim 9, wherein
a first and a second image stack with the same or a similar spectral range are used in each case for carrying out steps A-F.

11. Method according to any of the preceding claims, wherein,
in the case of timeseries recordings, steps A-F and preferably also according to Claim 2 are performed at a first time and the ascertained coordinate transformations are applied to image stacks recorded at further times.

12. Method according to any of the preceding claims, wherein,
in the case of timeseries recordings, steps A-F are repeated at a number of times in the timeseries.

13. Method according to any of the preceding claims, wherein, prior to the alignment, the coordinate systems of all image stacks are rotated through their recording angle about a Y-axis such that they are represented as if they were recorded from the same recording angle.

14. Data medium having a computer program configured to carry out the method according to any of the preceding claims.

15. SPIM microscope having
- an illumination device comprising an illumination light source (L1, L2) and an illumination beam path for illuminating a sample (P) with a light sheet,
- a detection device (CCD) for detecting light radiated from the sample (P) using an objective (O),
- the light sheet being substantially planar in the focus of the objective (O) or in a defined plane in the vicinity of the focus of the imaging objective (O) and the objective (O) having an optical axis (OA) intersecting the plane of the light sheet at an angle that is different from zero, preferably perpendicularly, **characterized by** a monitoring and control unit configured to carry out the method according to any of Claims 1 to 13.

16. Microscope according to Claim 15, having a graphical user interface allowing at least step D to be carried out by a user.

## Revendications

1. Procédé de microscopie SPIM à l'aide d'un microscope, comprenant
- un dispositif d'éclairage comprenant une source de lumière d'éclairage (L1, L2) et un trajet de faisceau d'éclairage destinés à éclairer un échantillon (P) avec une nappe de lumière,
- un dispositif de détection (CCD) destiné à détecter la lumière, qui est rayonnée par l'échantillon (P), avec un objectif (O),
- la nappe de lumière étant plane au foyer de l'objectif (O) ou dans un plan défini proche du foyer de l'objectif de reproduction (O) et l'objectif (O) comportant un axe optique (OA) qui coupe le plan de la nappe de lumière avec un angle différent de zéro, de préférence perpendiculairement,
- l'échantillon (P) étant déplacé à travers la nappe de lumière dans la direction de l'axe optique (OA) de l'objectif (O) afin de détecter différents plans d'échantillon et l'échantillon (P) étant éclairé sous au moins un premier et un deuxième angle d'éclairage et plusieurs plans d'échantillon étant détectés pour chaque angle d'éclairage et mémorisés sous forme d'au moins une première et une deuxième pile d'images (ST1, ST2) qui contiennent des structures d'échantillon,
**caractérisé en ce que**
A. les piles d'images (ST1, ST2) sont orientées manuellement les unes par rapport aux autres du fait que les systèmes de coordonnées de toutes les piles d'images (ST1, ST2) sont orientés dans le système de coordonnées de la première pile d'images (ST1),
B. les au moins une première et deuxième piles d'images (ST1, ST2) sont superposées pour former une pile d'images superposées (ST1+ST2),
C. la pile d'images superposées (ST1+ST2) est projetée dans une représentation bidimensionnelle,
D. les structures d'échantillon détectées sous différents angles d'éclairage et contenues dans la représentation bidimensionnelle sont corrigées en termes de position les unes par rapport aux autres,
E. une transformation de coordonnées est déterminée à partir des coordonnées de correction de position des structures d'échantillon,
F. la transformation de coordonnées est appliquée à la pile d'images superposées (ST1+ST2) en vue de l'orientation.

2. Procédé selon la revendication 1, l'orientation de la pile d'images superposées étant modifiée et les étapes B à F étant appliquées à la pile d'images superposées nouvellement orientée pour générer une pile d'images orientées en trois dimensions.

3. Procédé selon la revendication 2, la pile d'images orientées en trois dimensions étant orientée dans son orientation par rapport à la direction d'éclairage d'origine.

4. Procédé selon l'une des revendications précédentes, la transformation de coordonnées étant une transformation rigide ou affine ou élastique ou localement élastique.

5. Procédé selon l'une des revendications précédentes, une comparaison d'intensité entre les images étant effectuée à l'étape C pour les pixels individuels des images à l'intérieur des piles d'images superposées.

6. Procédé selon la revendication 5, le pixel utilisé étant celui qui a la valeur maximale ou la valeur minimale ou une valeur seuil spécifiée ou la valeur moyenne ou la valeur médiane.

7. Procédé selon l'une des revendications précédentes, la correction de position selon l'étape D étant effectuée dans un ordinateur par analyse d'image et/ou par des moyens de saisie destinés à un utilisateur.

8. Procédé selon l'une des revendications précédentes, une orientation grossière dans l'ordinateur et une orientation fine par les moyens d'entrée étant prévues.

9. Procédé selon l'une des revendications précédentes, les au moins une première et deuxième piles d'images étant détectées dans au moins deux domaines spectraux afin de détecter différents marqueurs fluorescents.

10. Procédé selon la revendication 9, une première et une deuxième pile d'images qui ont des domaines spectraux identiques ou similaires étant à chaque fois utilisées pour réaliser les étapes A à F.

11. Procédé selon l'une des revendications précédentes, lors de l'acquisition d'une série chronologique, les étapes A à F et de préférence également selon la revendication 2 étant réalisées à un premier instant et les transformations de coordonnées déterminées étant appliquées à des piles d'images acquises à d'autres instants.

12. Procédé selon l'une des revendications précédentes, lors de l'acquisition d'une série chronologique, les étapes A à F étant répétées à plusieurs instants de la série chronologique.

13. Procédé selon l'une des revendications précédentes, avant l'orientation, les systèmes de coordonnées de toutes les piles d'images tournant sur leur angle d'acquisition sur un axe Y de telle sorte qu'ils apparaissent comme s'ils avaient été acquis sous le même angle d'acquisition.

14. Support de données comprenant un programme informatique adapté pour mettre en œuvre le procédé selon l'une des revendications précédentes.

15. Microscope SPIM comprenant
- un dispositif d'éclairage comprenant une source de lumière d'éclairage (L1, L2) et un trajet de faisceau d'éclairage destinés à éclairer un échantillon (P) avec une nappe de lumière,
- un dispositif de détection (CCD) destiné à détecter la lumière, rayonnée par l'échantillon (P), avec un objectif (O),
la nappe de lumière étant sensiblement plane au foyer de l'objectif (O) ou dans un plan défini proche du foyer de l'objectif de reproduction (O) et l'objectif (O) comportant un axe optique (OA) qui coupe le plan de la nappe de lumière avec un angle différent de zéro, de préférence perpendiculairement,
**caractérisé par** une unité de commande et de contrôle, adaptée pour mettre en œuvre le procédé selon l'une des revendications 1 à 13.

16. Microscope selon la revendication 15, qui comporte une interface utilisateur graphique destinée à réaliser au moins l'étape D par le biais d'un utilisateur.
